# EUROPÄISCHE PATENTANMELDUNG

(11) **EP 3 147 834 A1**
(43) Veröffentlichungstag der Anmeldung: **29.03.2017**
(21) Anmeldenummer: 16020357.6
(22) Anmeldetag: 27.09.2016
(51) Int. Cl.: G06Q 10/06, G06Q 30/06, G06Q 20/00

(54) **VERFAHREN ZUR ANONYMISIERTEN NUTZUNG VON DIENSTEN IN EINEM NETZWERK**

(30) Priorität: 28.09.2015 DE 102015116348
(71) Anmelder: Deutsche Telekom AG, 53113 Bonn (DE)
(72) Erfinder: Sonntag, Thomas, 53343 Wachtberg (DE)
(74) Vertreter: Raible Deissler Lehmann Patentanwälte PartG mbB

(57) **Zusammenfassung**

Die Erfindung betrifft ein Verfahren zur anonymisierten Nutzung mindestens eines Dienstes (SERVICE) eines Dienstleisters (SP) in einem Netzwerk, wobei dem Nutzer von dem Dienstleister (SP) über einen dem Dienstleister (SP) in dem Netzwerk zugeordneten virtuellen Platz eine verfügbare Auswahl an Datenvermittlern (DM) bereitgestellt wird, wobei sich der Nutzer (KD) bei dem von dem Nutzer (KD) ausgewählten Datenvermittler (DM) authentifiziert und diesem nutzerspezifische, zur Bereitstellung des mindestens einen Dienstes notwendige Daten (KD*-Data) überträgt und der Dienstvermittler (DM) einem Dienstausführer (SH) automatisch den mindestens einen bereitzustellenden Dienst (SERVICE) und die zur Ausführung des mindestens einen Dienstes notwendigen nutzerspezifischen Daten (KD*-DATA) überträgt, wobei in einem weiteren Schritt der Dienstausführer (SH) eine dienstspezifische Transaktion (TX) für den mindestens einen auszuführenden Dienst (SERVICE) und eine dieser Transaktion (TX) zugeordnete eineindeutige, auf die nutzerspezifischen Daten (KD*-DATA) keine Rückschlüsse erlaubende Transaktionsidentität (TX-ID) generiert, wobei die Transaktionsidentität (TX-ID) unter Nennung des Dienstausführers (SH) an den Dienstleister (SP) übertragen wird, der den auszuführenden Dienst identifiziert und die Transaktionsidentität (TX-ID), Transaktionsdaten (TX-Data) in Abhängigkeit des mindestens einen auszuführenden Dienstes (SERVICE) an den Dienstausführer (SH) überträgt, wobei in einem weiteren Schritt der Dienstausführer (SH) mittels der Transaktionsidentität (TX-ID) wiederum die Transaktion (TX) identifiziert und mittels der kundenspezifischen, in der Transaktion (TX) enthaltenen Daten (KD*-DATA) und der Transaktionsdaten (TX-DATA) den mindestens einen Dienst (SERVICE) vollumfänglich ausführt.

## Beschreibung

### Technisches Gebiet

Die vorliegende Erfindung betrifft ein Verfahren zur anonymisierten Nutzung eines Dienstes in einem Netzwerk.

### Beschreibung des Standes der Technik

Im Internethandel stellt sich einem Kunden das Problem, wie bspw. eine Bezahlung erfolgen kann, ohne dem Händler schützenswerte Kreditkarten- oder Bankkontendaten, im Folgenden "Bankdaten" genannt, übermitteln zu müssen. Eine gängige Lösung ist es dabei, die Bankdaten bei einem Dienstleister, wie bspw. Amazon^{®} oder PayPal^{®} zu hinterlegen und die Bezahlung an diesen jeweiligen Dienstleister zu delegieren. Der Händler muss daher die Bankdaten nicht kennen, um die Zahlung zu erhalten. Allerdings beschränkt sich diese gängige Lösung ausschließlich auf den Service "Bezahlung" und kann nicht ohne Weiteres auf eine anonymisierte vollumfängliche Nutzung bzw. Abarbeitung eines Dienstes, der bspw. ferner eine mit der Bezahlung zusammenhängende Bereitstellung von Daten und/oder Gegenständen umfasst, erweitert werden.

Aus der US 2001 /0029472 A1 ist ein anonymer Kauf- und Verkauf-Managementserver bekannt, der zwischen einen An- und einen Verkäufer geschaltet ist und den Datenverkehr verwaltet und steuert. Allerdings bezieht sich auch hier der Teil, der zwischen An- und Verkäufer automatisiert und anonymisiert ablaufen kann, lediglich auf den Dienst "Bezahlung". Der Warenversand bspw. ist demgegenüber nicht vollständig automatisiert und anonymisiert, sondern beschränkt sich auf die Bereitstellung eines Zwischenempfängers, wie bspw. in Form eines Postfachs oder einer Packstation, von welchem bzw. welcher sich der Käufer die Ware selbstständig in persona abholen muss.

Vor dem Hintergrund des Standes der Technik war es nunmehr eine Aufgabe der vorliegenden Erfindung, eine Möglichkeit vorzusehen, eine Nutzung mindestens eines Dienstes bzw. eine Abarbeitung eines Auftrags, der in einem Netzwerk mit Hilfe von einem oder mehreren Dienstleistern auszuführen ist, vollständig anonymisiert und automatisiert ablaufen zu lassen.

Eine Lösung dieser Aufgabe wird von einem Verfahren mit den Merkmalen des unabhängigen Patentanspruchs 1 bereitgestellt. Ausgestaltungen des Verfahrens gehen aus den abhängigen Patentansprüchen sowie der Beschreibung hervor.

Das erfindungsgemäße Verfahren ist zur anonymisierten Nutzung mindestens eines Dienstes eines Dienstleisters in einem Netzwerk vorgesehen. Dabei wird dem Nutzer von dem Dienstleister über einen dem Dienstleister in dem Netzwerk zugeordneten virtuellen Platz eine verfügbare Auswahl an Datenvermittlern bereitgestellt, wobei sich der Nutzer bei dem von dem Nutzer ausgewählten Datenvermittler authentifiziert und diesem nutzerspezifische, zur Bereitstellung des mindestens einen Dienstes notwendige Daten überträgt. Der Dienstvermittler stellt einem Dienstausführer automatisch den mindestens einen bereitzustellenden Dienst und die zur Ausführung des mindestens einen Dienstes notwendigen nutzerspezifischen Daten bereit, in der Regel überträgt der Dienstvermittler einem Dienstausführer automatisch den mindestens einen bereitzustellenden Dienst und die zur Ausführung des mindestens einen Dienstes notwendigen nutzerspezifischen Daten. In einem weiteren Schritt generiert der Dienstausführer eine dienstspezifische Transaktion für den mindestens einen auszuführenden Dienst und eine dieser Transaktion zugeordnete eineindeutige, auf die nutzerspezifischen Daten keine Rückschlüsse erlaubende Transaktionsidentität. Die Transaktionsidentität wird unter Nennung des Dienstausführers an den Dienstleister übertragen, der den auszuführenden Dienst identifiziert und die Transaktionsidentität und Transaktionsdaten in Abhängigkeit des mindestens einen auszuführenden Dienstes an den Dienstausführer überträgt. In einem weiteren Schritt identifiziert der Dienstausführer mittels der Transaktionsidentität wiederum die Transaktion und führt mittels der nutzerspezifischen, in der Transaktion enthaltenen Daten und der Transaktionsdaten den mindestens einen Dienst vollumfänglich aus.

Mit Ausnahme der von dem Nutzer durchzuführenden Verfahrensschritte läuft das Verfahren in der Regel voll automatisiert ab.

Gemäß einer möglichen Ausgestaltung des erfindungsgemäßen Verfahrens wird der mindestens eine Dienst als Teil eines Auftrags ausgeführt, wobei der Auftrag von dem Nutzer an den Dienstleister über den dem Dienstleister in dem Netzwerk zugeordneten virtuellen Platz über einen von dem Nutzer zu startenden Aktivierungsmechanismus ausgegeben wird. Nach Start des Aktivierungsmechanismus wird dem Nutzer die verfügbare Auswahl an Datenvermittlern bereitgestellt. Ferner wird ein Dienstauftrag mit einer Auftragsidentität und dem mindestens einen Dienst erstellt und dem von dem Nutzer ausgewählten Datenvermittler übermittelt.

In weiterer Ausgestaltung des erfindungsgemäßen Verfahrens wird die Transaktionsidentität der Auftragsidentität zugeordnet und unter Nennung des Dienstausführers an den Dienstleister übermittelt, der den Dienstauftrag mittels der Auftragsidentität identifiziert.

Bei dem Netzwerk handelt es sich in der Regel um das Internet, wobei der dem Dienstleister in dem Netzwerk zugeordnete virtuelle Platz durch eine Website repräsentiert wird. Der zu startende Aktivierungsmechanismus kann durch eine Eingabe des Nutzers auf der Website des Dienstleisters, bspw. durch Drücken eines auf der Website dargestellten Buttons, realisiert werden. Das Drücken des Buttons kann dabei entweder mittels eines Cursors und einer einem die Website darstellenden Bildschirm zugeordneten Tastatur oder im Falle eines Touchscreens durch Berühren des auf dem Touchscreen dargestellten Buttons realisiert werden. Der zu startende Aktivierungsmechanismus ist somit als eine Wechselwirkung zwischen dem Nutzer und der auf einem dem Nutzer zugeordneten Bildschirm dargestellten Website des Dienstleisters zu sehen.

Der mindestens eine Auftrag umfasst in der Regel eine Mehrzahl von auszuführenden Diensten, die zur Abarbeitung des mindestens einen Auftrags auszuführen sind. In Ausgestaltung des erfindungsgemäßen Verfahrens werden diese mehreren auszuführenden Dienste zumindest teilweise parallel und/oder sequentiell ausgeführt. Das bedeutet, dass ein Teil der auszuführenden Dienste zueinander parallel ausgeführt werden und ggf. ein verbleibender Teil der auszuführenden Dienste nacheinander, d. h. sequentiell, auszuführen ist. Beispielsweise ist es denkbar, dass bei einem Kauf der Dienst "Bezahlung" vor dem Dienst "Versand der Ware" ausgeführt wird, d. h. die beiden auszuführenden Dienste werden hintereinander und somit sequentiell ausgeführt. Ein umgekehrter Vorgang ist ebenfalls denkbar, nämlich wenn eine Zahlung erst nach Erhalt der Ware gefordert wird. Denkbar wäre auch eine parallele Ausführung der zwei auszuführenden Dienste bei dem Kauf einer Ware.

Durch das erfindungsgemäße Verfahren wird einem Nutzer ermöglicht, schützenswerte Daten, im Rahmen der vorliegenden Erfindung als nutzerspezifische Daten bezeichnet, bei einem Datenvermittler zu hinterlegen. Der Datenvermittler wiederum ist dazu ausgelegt, die für einen von einem Dienstausführer auszuführenden Dienst, der zur Abarbeitung des Auftrags auszuführen ist, notwendigen nutzerspezifischen Daten im Auftrag des Nutzers an den Dienstausführer weiterzugeben. Der Vorteil des erfindungsgemäßen Verfahrens besteht nun darin, dass der Dienstleister die genannten nutzerspezifischen Daten nicht kennen muss und dass der Nutzer an mehrere Dienstleister Aufträge ausgeben kann, aber seine Daten, d. h. die nutzerspezifischen Daten, nur bei wenigen Datenvermittlern hinterlegen muss, wobei der jeweilige Datenvermittler die nutzerspezifischen Daten auch nur an einen oder wenige Dienstausführer weiterleiten muss. Dadurch reduziert sich die Anzahl der Stellen, die bei einer Abarbeitung eines Auftrags in einem Netzwerk Kenntnis über sensible nutzerspezifische Daten haben müssen, enorm.

Gemäß einer weiteren Ausführungsform des erfindungsgemäßen Verfahrens werden zumindest zwei der auszuführenden Dienste zur Ausführung des Dienstauftrags von verschiedenen Dienstausführern ausgeführt.

Gemäß einer weiteren Ausgestaltung des erfindungsgemäßen Verfahrens ist der zumindest eine auszuführende Dienst durch den Dienstausführer ausgewählt aus der Gruppe bestehend aus Zahlungsabwicklung, Warenversand, Altersverifikation und Bonitätsprüfung.

Bei dem auszuführenden Dienst "Altersverifikation" handelt es sich um einen Vorgang, bei dem bspw. altersbeschränkte Daten und/oder Waren, wie bspw. Filme oder Medikamente von einem Nutzer bei einem Dienstleister beauftragt werden, wozu der Dienstleister jedoch zur Abarbeitung des Auftrags das jeweilige Alter des Nutzers benötigt. Bislang war es so, dass der Nutzer durch Vorlage und/oder Kopie seines Personalausweises oder seines Passes das Alter bestätigt. Damit erhält der Dienstleister jedoch vertrauliche Informationen, wie bspw. genaues Geburtsdatum und bspw. Personalausweisnummer. Mithilfe des erfindungsgemäßen Verfahrens ist es nun möglich, das Geburtsdatum des Nutzers bei dem von dem Nutzer ausgewählten Datenvermittler als nutzerspezifisches Datum zu hinterlegen. Der Nutzer autorisiert dadurch gemäß dem erfindungsgemäßen Verfahren den Datenvermittler oder auch den Datenausführer, an welchen von dem Datenvermittler zumindest ein Teil der nutzerspezifischen Daten übermittelt wird, eine Altersanfrage des Dienstleisters, wie bspw. "Ist der Nutzer mindestens 18 Jahre alt?" zu beantworten.

Bei dem Vorgang "Warenversand" benötigt ein Dienstleister bislang die genauen Adressdaten des Nutzers, um eine von dem Nutzer in einem Auftrag bei dem Dienstleister angeforderte Ware an den Nutzer schicken zu können.

Mithilfe des erfindungsgemäßen Verfahrens ist es nun wiederum möglich, die Adressdaten als nutzerspezifische Daten bei dem von dem Nutzer ausgewählten Datenvermittler zu hinterlegen und den Versand der Ware als den mindestens einen auszuführenden Dienst an den Dienstausführer zu delegieren, der wiederum die erforderlichen Adressdaten als die zur Ausführung des mindestens einen Dienstes notwendigen nutzerspezifischen Daten vom Datenvermittler erhält. Der Dienstleister benötigt dabei nicht die Adressdaten des Nutzers. In dem Fall wäre es denkbar, dass der Dienstvermittler und der Dienstausführer identisch sind und typischerweise einem Paketversender, wie bspw. DHL, entsprechen.

Bei dem Vorgang "Bonitätsprüfung" wird eine zur Abarbeitung des mindestens einen Auftrags notwendige Bonitätsprüfung, ähnlich wie bei der Altersverifikation erläutert, über den Datenvermittler bzw. den Datenausführer vollzogen.

In weiterer Ausgestaltung umfassen die nutzerspezifischen Daten, wie in den voranstehend erläuterten Beispielen genannt, Adresse des Nutzers, Alter des Nutzers und/oder Bankdaten des Nutzers.

Wie bereits voranstehend erwähnt, wird in weiterer Ausgestaltung des erfindungsgemäßen Verfahrens der Dienstausführer implizit durch den Datenvermittler vorgegeben. Insbesondere ist es möglich, dass der Datenvermittler und der Dienstausführer identisch sind.

Gemäß einer weiteren Ausgestaltung des erfindungsgemäßen Verfahrens erzeugt der Dienstausführer nach Ausführen des mindestens einen Dienstes des Dienstauftrags eine Transaktionsrückmeldung, aus der ersichtlich ist, ob die Transaktion erfolgreich war. Ferner kann die Transaktionsrückmeldung Details zur Ausführung des mindestens einen Dienstes umfassen. Im Falle eines Paketversands könnte dies bspw. die Information sein: "Paket wurde beim Nachbarn X hinterlegt."

In noch einer weiteren Ausgestaltung wird die Transaktionsrückmeldung von dem Dienstausführer an den Datenvermittler und von dem Datenvermittler an den Dienstleister gesendet.

Bei der zu erzeugenden Transaktionsidentität handelt es sich um eine eineindeutige und anonyme ID, d. h. Kennung, in dem Sinne, dass sie keine Rückschlüsse auf den Dienstauftrag und die nutzerspezifischen Daten zulässt. Diese Transaktionsidentität kann bspw. durch eine UUID (Universally Unique Identifier) realisiert werden.

In weiterer Ausgestaltung des erfindungsgemäßen Verfahrens verifiziert der Datenvermittler die an ihn von dem Nutzer übermittelten nutzerspezifischen Daten, im Folgenden auch kurz KD-DATA genannt. Für den Dienst (auch SERVICE genannt) "Versand" bspw. ist der Datenvermittler, bspw. der Paketdienstleister DHL^{®} im Stande zu prüfen, ob die KD-DATA "Adresse" existiert. Dazu kann der Nutzer den Datenvermittler autorisieren, beim Einwohnermeldeamt zu erfragen, ob die Adresse dem Nutzer zuzuordnen ist.

KD-DATA wird im Folgenden sowohl für die Gesamtheit der nutzerspezifischen Daten als auch im Einzelfall für ein einzelnes nutzerspezifisches Datum verwendet.

Für den SERVICE "Bezahlung" kann der Datenvermittler prüfen, ob die KD-DATA "Bankverbindung" existiert. Dazu kann der Nutzer den Datenvermittler autorisieren, bei der zuständigen Bank zu verifizieren, dass die angegebene Bankverbindung dem Nutzer gehört.

Für den SERVICE "Altersverifikation" kann der Datenvermittler, bspw. durch Vorlage des Personalausweises oder durch ein Postidentverfahren, verifizieren, ob das KD-DATA "Geburtsdatum" stimmt.

Ferner ist es vorgesehen, dass alle zur Nutzung des mindestens einen Dienstes bzw. zur Abarbeitung des Auftrags durchzuführenden Datenübertragungen über gesicherte Kanäle übertragen werden, d. h. dass die jeweiligen Daten durch mindestens ein kryptografisches Verfahren gesichert und/oder authentifiziert werden. Dies kann bspw. durch eine Erzeugung und Zuordnung eines Zertifikats realisiert werden. Generell ist die Erzeugung und Zuweisung jeweiliger Schlüssel denkbar. Andere geeignete kryptografische Verfahren sind ebenfalls einsetzbar, wie bspw. das im Internet gängige sichere Hypertext-Übertragungsprotokoll bzw. Hypertext Transfer Protocol Secure (https).

Ferner betrifft die vorliegende Erfindung ein Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, das voranstehend beschriebene erfindungsgemäße Verfahren, insbesondere in all seinen Ausführungsformen auszuführen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Zeichnung

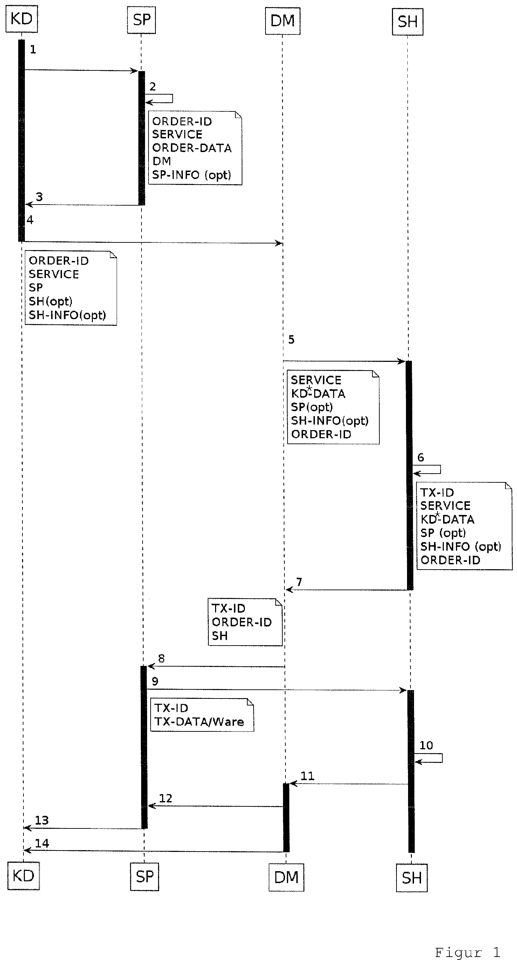

Figur 1 zeigt in schematischer Darstellung einen Ablauf einer Ausführungsform des erfindungsgemäßen Verfahrens.

### Ausführliche Beschreibung

Figur 1 zeigt in schematischer Darstellung eine Ausführungsform des erfindungsgemäßen Verfahrens zur anonymisierten Nutzung mindestens eines Dienstes bzw. zur anonymisierten Abarbeitung mindestens eines Auftrags in einem Netzwerk, bspw. im Internet. Dabei ist einem Dienstleiter SP in dem Netzwerk ein virtueller Platz, wie bspw. eine Website zugeordnet, über welche ein Nutzer KD einen Aktivierungsmechanismus starten kann, um dadurch den Auftrag an den Dienstleister SP auszugeben. Handelt es sich bspw. um die Bereitstellung bestimmter Daten, wie bspw. eines Films, oder um den Kauf einer Ware über die Internetseite bzw. Website des Dienstleisters, so geht der Nutzer KD mithilfe einer ihm zugeordneten Recheneinheit, wie bspw. eines PCs oder eines Smartphones auf die Website des Dienstleisters SP, sucht dort einen von ihm gewünschten Film bzw. eine Ware aus und stößt bspw. mit im Internet üblichen Verfahren, wie bspw. mithilfe eines Warenkorbs oder durch Drücken eines Kaufen-Buttons etc., eine Bestellung bei dem Dienstleister SP an, d. h. der Nutzer KD gibt den Auftrag an den Dienstleister SP in einem Schritt 1 aus. In einem Schritt 2 wird seitens des Dienstleisters SP ein Dienstauftrag ORDER mit einer Auftragsidentität ORDER-ID und mindestens einem Dienst SERVICE erstellt. Nach Starten des Aktivierungsmechanismus, d. h. nach Ausgabe des Auftrags an den Dienstleister SP, ist in der hier dargestellten Ausführungsform des erfindungsgemäßen Verfahrens vorgesehen, dass dem Nutzer KD auf der Website des Dienstleisters SP angeboten wird, den auszuführenden Dienst SERVICE, bspw. eine Bereitstellung des gewünschten Films oder eine Versandabwicklung, über einen oder einen von mehreren zur Auswahl bereitgestellten Datenvermittlern DM auszuführen. Der Nutzer wählt einen Datenvermittler DM aus und wird somit automatisch auf eine Website des Datenvermittlers DM weitergeleitet.

Der von dem Dienstleister SP erstellte Dienstauftrag ORDER umfasst eine Order-ID, die den Dienstauftrag ORDER bei dem Dienstleister SP identifiziert und für Dritte keine Rückschlüsse auf den Auftragsinhalt zulässt, den auszuführenden Dienst SERVICE, der den Dienst z. B. eine Bereitstellung des gewünschten Films oder Zahlungsausführung oder eine Versandabwicklung identifiziert, ORDER-DATA, die den eigentlichen Auftragsdaten entsprechen, eine Identität DM, die den Datenvermittler identifiziert, und SP-INFO, die Information über den Dienstleister SP, wie bspw. Namen, Anschrift etc. umfassen. Die letztgenannten SP-INFOs sind optional und nicht zwingend erforderlich. Die genannten ORDER-DATA sind im Falle des auszuführenden Dienstes WARENVERSAND bspw. Anzahl und Artikelnummern der zu versendenden Waren, für den Dienst ZAHLUNGSABWICKLUNG bspw. der zu zahlende Betrag und für den Dienst ALTERSVERIFIKATION das zu verifizierende Alter.

In Schritt 3 sendet der Dienstleister SP die Auftragsidentität ORDER-ID an den Nutzer KD.

In Schritt 4 beauftragt der Nutzer KD den von ihm ausgewählten Datenvermittler DM mit der Abarbeitung des Dienstauftrags ORDER durch einen Dienstausführer SH. Im Falle, dass der Nutzer KD noch nicht bei dem von ihm ausgewählten Datenvermittler DM angemeldet war, muss der Nutzer KD dies zunächst auf der Website des entsprechenden Datenvermittlers DM tun. Dazu legt der Nutzer KD bei dem Datenvermittler DM ein nutzerspezifisches Nutzerkonto (Account) an und übermittelt dem Datenvermittler DM nutzerspezifische Daten KD-DATA, die zur Abarbeitung des Auftrags benötigt werden, wie bspw. Adresse und/oder Geburtsdaten des Nutzers KD. Der Dienstausführer SH kann bspw. implizit durch den Datenvermittler DM vorgegeben werden, bspw. können der Datenvermittler DM und der Dienstausführer SH identisch sein. Der Dienstausführer SH kann aber auch ebenfalls vom Nutzer KD bspw. über die Internetseite des Dienstleisters SP oder über die des Datenvermittlers DM ausgewählt werden. Der Nutzer KD authentifiziert sich bei dem von ihm ausgewählten Datenvermittler DM und schickt dem Datenvermittler DM die Identität SP des Dienstleisters, die Auftragsidentität ORDER-ID, den auszuführenden Dienst SERVICE und optional den Dienstausführer SH bzw. dessen Identität SH sowie Informationen für den Dienstausführer SH-INFO, welche Daten umfassen, die vom Dienstausführer SH benötigt werden, z. B. für den Dienst SERVICE "Warenversand" Lieferhinweise, Wunschlieferdatum etc.

Die voranstehend genannten Schritte 3 und 4 können auch vom Dienstleister SP im Auftrag des Nutzers KD durchgeführt werden. Wenn bspw. der Nutzer KD den Auftrag bspw. über das Internet an den Dienstleister SP ausgibt, kann die Internetseite den Nutzer KD automatisch zur Seite, d. h. zur Website des Datenvermittlers DM umleiten, damit der Nutzer KD dort den Datenvermittler DM beauftragen kann. Die genannten Daten würden dann durch den Dienstleister SP an den Datenvermittler DM übertragen werden.

In Schritt 5 schickt der Datenvermittler DM an den Dienstausführer SH den mindestens einen auszuführenden Dienst SERVICE, mindestens einen zur Ausführung des mindestens einen Dienstes SERVICE notwendigen Teil der nutzerspezifischen Daten KD*-DATA, optional als Information die Identität SP des Dienstleisters SP sowie, falls benötigt, weitere für den Dienstausführer SH notwendige Informationen SH-INFO zur Ausführung des mindestens einen auszuführenden Dienstes SERVICE sowie die Auftragsidentität ORDER-ID. Die ORDER-ID kann entfallen, falls die Schritte 5 bis 7 synchron ausgeführt werden.

In Schritt 6 erzeugt der Dienstausführer SH daraufhin eine Transaktion TX. Die Transaktion TX umfasst eine Transaktionsidentität TX-ID, den mindestens einen auszuführenden Dienst SERVICE, den zur Ausführung des Dienstes notwendigen Teil der nutzerspezifischen Daten KD*-DATA, optional die Identität des Dienstleisters SP, die ggf. notwendigen Informationen für den Dienstausführer SH-INFO sowie die Auftragsidentität ORDER-ID. Die ORDER-ID kann entfallen, falls die Schritte 5 bis 7 synchron ausgeführt werden.

Die Transaktionsidentität TX-ID muss eindeutig sein und ist dergestalt, dass sie keine Rückschlüsse auf die in der Transaktion TX enthaltenen und oben genannten Daten erlaubt.

In Schritt 7 schickt der Dienstausführer SH die Transaktionsidentität TX-ID an den Datenvermittler DM.

Der Datenvermittler DM ordnet die Transaktionsidentität TX-ID der Auftragsidentität ORDER-ID zu und schickt in einem Schritt 8 die Transaktionsidentität TX-ID, die Auftragsidentität ORDER-ID und die Identität des Dienstausführers SH an den Dienstleister SP. Falls im Vorfeld dem Dienstausführer SH die Identität von SP übermittelt wurde sowie auch die Auftragsidentität ORDER-ID, kann der Dienstausführer SH alternativ die Transaktionsidentität TX-ID, die Auftragsidentität ORDER-ID und die Identität von dem Dienstausführer SH auch direkt an den Dienstleister SP übertragen. Dann würde der genannte Schritt 7 entfallen.

In Schritt 9 identifiziert der Dienstleister SP den Dienstauftrag ORDER mittels der Auftragsidentität ORDER-ID und überträgt die Transaktionsidentität TX-ID und Daten TX-DATA und/oder WAREN an den Dienstausführer SH, die dieser benötigt, um den Dienstauftrag ORDER bzw. den darin umfassten mindestens einen auszuführenden Dienst SERVICE auszuführen. Die Transaktionsdaten TX-DATA enthalten nicht die nutzerspezifischen Daten KD-DATA. Die Transaktionsdaten TX-Daten umfassen vielmehr dienstspezifische Daten, wie bspw. bei dem SERVICE "Bezahlung" den zu zahlenden Betrag oder bei dem SERVICE "Altersverifikation" das zu verifizierende Alter.

In einem weiteren Schritt 10 ermittelt der Dienstausführer SH mittels der Transaktionsidentität TX-ID die Transaktion TX und führt mithilfe der in der Transaktion TX enthaltenen nutzerspezifischen Daten KD*-DATA und der ferner dargestellten optional enthaltenen Information SH-INFO für den Dienstausführer SH und den vom Dienstleister SP erhaltenen Transaktionsdaten TX-DATA den mindestens einen Dienst SERVICE aus.

Nach Ausführung des mindestens einen in dem Dienstauftrag ORDER enthaltenen Dienst SERVICE erzeugt der Dienstausführer SH eine Auftragsbestätigung TX-RESPONSE, aus der ersichtlich ist, ob die Transaktion TX erfolgreich war. Die Auftragsbestätigung TX-RESPONSE kann auch weitere Informationen, wie bspw. Details zur Ausführung des mindestens einen Dienstes SERVICE umfassen. Diese Auftragsbestätigung TX-RESPONSE wird von dem Dienstausführer SH in einem Schritt 11 an den Datenvermittler DM geschickt, der in einem Schritt 12 die Auftragsbestätigung TX-RESPONSE an den Dienstleister SP schickt, der dadurch im Stande ist, den Dienstauftrag für sich abzuschließen, falls der Auftrag ORDER nur den einen auszuführenden Dienst SERVICE umfasst.

In einem optionalen Schritt 13 kann der Dienstleister SP den Nutzer KD über die Transaktion TX informieren. Falls der von dem Nutzer KD an den Dienstleister SP ausgegebene Auftrag aus mehreren auszuführenden Diensten SERVICE besteht, kann der Dienstleister SP warten, bis eine jeweilige Transaktion TX für jeden auszuführenden Dienst SERVICE erfolgreich war und dann den Nutzer KD informieren.

In einem Schritt 14 kann ferner der Datenvermittler DM den Nutzer KD über die Transaktion TX informieren.

Im Folgenden soll anhand von verschiedenen auszuführenden beispielhaften Diensten erläutert werden, um welche Daten es sich konkret bei den einzelnen aufgeführten abstrakt genannten Daten handelt bzw. handeln kann.

Im Falle eines auszuführenden Dienstes SERVICE "Bezahlung" handelt es sich bei dem Dienstausführer SH bspw. um einen Zahlungsdienstleisters, wie bspw. PayPal^{®} oder eine Bank. Die Transaktionsdaten TX-DATA umfassen den zu zahlenden Betrag. Die zur Ausführung des Dienstes SERVICE "Bezahlung" notwendigen nutzerspezifischen Daten KD*-DATA sind in dem Fall die Kontodaten des Nutzers KD. Die Kontodaten des Dienstleisters SP können vom Dienstausführer SH durch Kenntnis des Dienstleisters SP ermittelt werden oder bspw. in der genannten SH-INFO enthalten sein. Die Ausführung des Dienstes SERVICE "Bezahlung" wird durch eine Überweisung des zu zahlenden Betrags vom Konto des Nutzers KD auf das Konto des Dienstleisters SP realisiert. Die genannte Auftragsbestätigung TX-RESPONSE entspricht dann einer Aussage, dass die Überweisung erfolgreich oder nicht erfolgreich war.

Bei Ausführung des Dienstes SERVICE "Bonität" ist der Dienstausführer SH bspw. ein Dienstleister, der Bonitäten prüft. Bei den Transaktionsdaten TX-DATA handelt es sich dabei um für die Prüfung notwendige auftragsspezifische Daten, wie bspw. einen zu zahlenden Betrag. Bei den zur Ausführung des Dienstes notwendigen nutzerspezifischen Daten KD*-DATA handelt es sich um einschlägige nutzerspezifische Daten, die für eine Bonitätsprüfung erforderlich sind. Die Ausführung des Dienstes "Bonitätsprüfung" wird dann durch eine Prüfung, ob der Nutzer KD die für den Dienstauftrag (ORDER) erforderliche Bonität hat, realisiert. Die Auftragsbestätigung TX-RESPONSE entspricht einer Aussage darüber, ob der Nutzer KD die Bonität hat oder nicht.

Zur Ausführung des Dienstes SERVICE "Altersverifikation" umfassen die nutzerspezifischen Daten KD*-DATA ein Geburtsdatum des Nutzers KD. Die Transaktionsdaten TX-DATA umfassen das zu verifizierende Alter, und der Dienst selbst wird ausgeführt durch Prüfung, ob der Nutzer KD das zu verifizierende Alter hat. Die Auftragsbestätigung TX-RESPONSE gibt dann eine Aussage darüber, ob der Nutzer KD das erforderliche Alter hat oder nicht.

Bei dem Dienst SERVICE "Warenversand" ist der Dienstausführer in der Regel ein Paketdienstleister, der zur Ausführung des Dienstes "Warenversand" einen notwendigen Teil der nutzerspezifischen Daten KD*-DATA umfasst, bspw. eine Adresse des Nutzers, an welchen die Ware zu senden bzw. zu schicken ist. Die Information für den Dienstausführer SH-INFO umfasst bspw. ein Wunschlieferdatum. Der Dienst selbst wird dadurch ausgeführt, dass der Dienstausführer SH die vom Dienstleister SP erhaltene Ware an den Nutzer KD schickt oder alternativ die Ware beim Dienstleister SP abholt und diese an den Nutzer KD schickt. Die Auftragsbestätigung TX-RESPONSE umfasst dabei dann ein Versanddatum sowie eine Versandbestätigung.

KD-DATA umfassen im Rahmen der vorliegenden Beschreibung nutzerspezifische Daten, die generell zu Abarbeitung eines Auftrags von Interesse sein könnten. KD*-DATA umfassen demgegenüber nur den Teil der KD-DATA, die spezifisch für einen von einem gerade vorgesehenen Dienstausführer auszuführenden Dienst benötigt werden. KD*-DATA sind also in der Regel eine Untermenge von KD-DATA. KD-DATA soll im Rahmen der vorliegenden Beschreibung allgemein nutzerspezifische Daten, auch einzelne nutzerspezifische Daten beschreiben.

Ein typisches Szenario ist bspw. ein Handel über das Internet, das im Folgenden beschrieben wird:

Der Nutzer KD geht auf die Internetseite des Dienstleisters SP, sucht dort eine Ware aus und stößt eine Bestellung an, bspw. mit im Internet üblichen Verfahren, bspw. mit Warenkorb und Drücken eines "Kaufen"-Buttons etc. Nachdem der Nutzer auf "Kaufen" o. ä. gedrückt hat, wird er auf eine Website des Dienstleisters SP geführt, die dem Nutzer KD den Dienst SERVICE "Versandabwicklung" über einen oder einen von mehreren angebotenen Datenvermittlern DM anbietet. Der Nutzer KD wählt einen Datenvermittler DM aus und wird automatisch auf eine Seite, d. h. eine Website, des Datenvermittlers DM weitergeleitet. Diese Weiterleitung kann bspw. eine Auftragsidentität ORDER-ID umfassen, die zuvor von dem Dienstleister SP für den von ihm ebenfalls in Reaktion auf die Auftragsstellung durch den Nutzer erstellten Auftrag ORDER generiert wurde. Die Website des Datenvermittlers DM bietet dem Nutzer KD an, sich mit seinem Nutzerkonto ACCOUNT beim Datenvermittler DM anzumelden, falls der Nutzer KD schon ein Konto ACCOUNT beim Datenvermittler hat, oder ein neues Konto ACCOUNT beim Datenvermittler DM anzulegen. Dieses Nutzerkonto ACCOUNT enthält mindestens eine nutzerspezifische Information KD-DATA des Nutzer KD. Nach dem Anmelden bzw. Einloggen des Nutzers KD beim Datenvermittler DM wählt der Nutzer KD einen Dienstausführer SH, falls mehrere zur Verfügung stehen, und optional eine Lieferadresse als Teil der nutzerspezifischen Daten KD-DATA, falls der Nutzer KD mehrere Adressen beim Datenvermittler DM hinterlegt hat, wobei auch ein Versand an eine Paketstation denkbar ist, oder der Nutzer KD hinterlegt eine weitere Lieferadresse in Form von nutzerspezifischen Daten beim Datenvermittler DM. Weiter können dem Nutzer KD Versandoptionen des Dienstausführers SH, wie bspw. Expressversand, Standardversand, Wunschlieferdatum, Abgabe beim Nachbarn, Nachnahme etc. angeboten werden, die dann in die für den zur Ausführung des Dienstes notwendigen Daten SH-INFO für den Dienstausführer SH übertragen werden. Eine derartige Versandoption kann die Website des Datenvermittlers DM im Auftrag des Dienstausführers SH anbieten. Alternativ kann das Angebot einer derartigen Versandoption durch Einbettung einer Website oder Umleitung auf eine Seite des Dienstausführers SH realisiert werden. Nachdem der Nutzer KD den Dienstausführer SH und ggf. Versandoptionen ausgewählt hat, stößt er auf der Website des Datenvermittlers DM bzw. des Dienstausführers SH, falls er auf diese bereits umgeleitet wurde, den entsprechenden Versand an. Nun folgen im Hintergrund, d. h. serverseitig und für den Nutzer KD nicht mehr einsehbar, die voranstehend in Zusammenhang mit Figur 1 beschriebenen Schritte 7 ff.

Analog kann mit anderen für die Bestellabwicklung erforderlichen Diensten, wie Bezahlung und Altersverifikation, verfahren werden.

Die Abkürzungen "KD", "SP", "DM" und "SH" sollen im Rahmen der vorliegenden Beschreibung sowohl die jeweiligen Entitäten als auch deren Identität bezeichnen.

## Patentansprüche

1. Verfahren zur anonymisierten Nutzung mindestens eines Dienstes (SERVICE) eines Dienstleisters (SP) in einem Netzwerk, wobei dem Nutzer von dem Dienstleister (SP) über einen dem Dienstleister (SP) in dem Netzwerk zugeordneten virtuellen Platz eine verfügbare Auswahl an Datenvermittlern (DM) bereitgestellt wird, wobei sich der Nutzer (KD) bei dem von dem Nutzer (KD) ausgewählten Datenvermittler (DM) authentifiziert und diesem nutzerspezifische, zur Bereitstellung des mindestens einen Dienstes notwendige Daten (KD*-Data) überträgt und der Dienstvermittler (DM) einem Dienstausführer (SH) automatisch den mindestens einen bereitzustellenden Dienst (SERVICE) und die zur Ausführung des mindestens einen Dienstes notwendigen nutzerspezifischen Daten (KD*-DATA) überträgt, wobei in einem weiteren Schritt der Dienstausführer (SH) eine dienstspezifische Transaktion (TX) für den mindestens einen auszuführenden Dienst (SERVICE) und eine dieser Transaktion (TX) zugeordnete eineindeutige, auf die nutzerspezifischen Daten (KD*-DATA) keine Rückschlüsse erlaubende Transaktionsidentität (TX-ID) generiert, wobei die Transaktionsidentität (TX-ID) unter Nennung des Dienstausführers (SH) an den Dienstleister (SP) übertragen wird, der den auszuführenden Dienst identifiziert und die Transaktionsidentität (TX-ID), Transaktionsdaten (TX-Data) in Abhängigkeit des mindestens einen auszuführenden Dienstes (SERVICE) an den Dienstausführer (SH) überträgt, wobei in einem weiteren Schritt der Dienstausführer (SH) mittels der Transaktionsidentität (TX-ID) wiederum die Transaktion (TX) identifiziert und mittels der nutzerspezifischen, in der Transaktion (TX) enthaltenen Daten (KD*-DATA) und der Transaktionsdaten (TX-DATA) den mindestens einen Dienst (SERVICE) vollumfänglich ausführt.

2. Verfahren nach Anspruch 1, bei dem der mindestens eine Dienst als Teil eines Auftrags ausgeführt wird, wobei der Auftrag von dem Nutzer (KD) an den Dienstleister (SP) über den dem Dienstleister (SP) in dem Netzwerk zugeordneten virtuellen Platz über einen von dem Nutzer (KD) zu startenden Aktivierungsmechanismus ausgegeben wird, wobei nach Start des Aktivierungsmechanismus dem Nutzer (KD) die verfügbare Auswahl an Datenvermittlern (DM) bereitgestellt wird, ein Dienstauftrag (ORDER) mit einer Auftragsidentität (ORDER-ID) und dem mindestens einen Dienst (SERVICE) erstellt und dem von dem Nutzer (KD) ausgewählten Datenvermittler (DM) übermittelt wird.

3. Verfahren nach Anspruch 2, wobei die Transaktionsidentität (TX-ID) der Auftragsidentität (ORDER-ID) zugeordnet und unter Nennung des Dienstausführers (SH) an den Dienstleister (SP) übermittelt wird, der den Dienstauftrag (ORDER) mittels der Auftragsidentität (ORDER-ID) identifiziert.

4. Verfahren nach einem der Ansprüche 2 oder 3, bei dem der Dienstauftrag (ORDER) mehrere auszuführende Dienste (SERVICES) umfasst, die zur Ausführung des Dienstauftrags (ORDER) zumindest teilweise parallel und/oder sequentiell ausgeführt werden.

5. Verfahren nach Anspruch 4, bei dem zumindest zwei der mehreren auszuführenden Dienste (SERVICES) von verschiedenen Dienstausführern (SH) ausgeführt werden.

6. Verfahren nach einem der voranstehenden Ansprüche, bei dem der mindestens eine auszuführende Dienst (SERVICE) ausgewählt ist aus der Gruppe bestehend aus Zahlungsabwicklung, Warenversand, Altersverifikation, Bonitätsprüfung.

7. Verfahren nach einem der voranstehenden Ansprüche, bei dem die nutzerspezifischen Daten Adresse des Nutzers, Alter des Nutzers und/oder Bankdaten des Nutzers umfassen.

8. Verfahren nach einem der voranstehenden Ansprüche, bei dem der Dienstausführer (SH) implizit durch den Datenvermittler (DM) vorgegeben wird, insbesondere identisch zu dem Datenvermittler (DM) ist.

9. Verfahren nach einem der voranstehenden Ansprüche, bei dem der Dienstausführer (SH) nach Ausführung des mindestens einen Dienstes (SERVICE) automatisch eine Transaktionsrückmeldung (TX-Response) erzeugt, aus der ersichtlich ist, ob die Transaktion (TX) erfolgreich war und/oder Details zur Ausführung des mindestens einen Dienstes umfasst.

10. Verfahren nach Anspruch 9, bei dem die Transaktionsrückmeldung (TX-Response) von dem Dienstausführer (SH) an den Datenvermittler (DM) und von dem Datenvermittler (DM) an den Dienstleister (SP) übertragen wird.

11. Verfahren nach einem der voranstehenden Ansprüche, bei dem die Transaktionsidentität (TX-ID) durch eine UUID realisiert wird.

12. Verfahren nach einem der voranstehenden Ansprüche, bei dem der Datenvermittler (DM) die nutzerspezifischen Daten (KD*-DATA) verifiziert.

13. Verfahren nach einem der voranstehenden Ansprüche, bei dem bei zur Nutzung des mindestens einen Dienstes durchzuführenden Datenübertragungen die jeweiligen Daten durch mindestens ein kryptografisches Verfahren gesichert und/oder authentifiziert werden.

14. Verfahren nach Anspruch 13, bei dem das mindestens eine kryptografische Verfahren eine Public-Key-Infrastruktur (PKI) zur Ausstellung von digitalen Zertifikaten verwendet.

15. Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, ein Verfahren nach einem der voranstehenden Ansprüche auszuführen.
